# EUROPEAN PATENT SPECIFICATION

(11) **EP 2 823 891 B1**
(45) Date of publication and mention of the grant of the patent: **13.07.2016**
(21) Application number: 14172309.8
(22) Date of filing: 13.06.2014
(51) Int. Cl.: B05B 1/00, B05B 15/06, F16L 37/14

(54) **Air-power tool gun with quick-changing structure**
Druckluftpistole mit Schnellkupplung
Soufflette à air comprimé munie d'un raccord rapide

(30) Priority: 18.06.2013 CN 201310244762; 04.05.2014 CN 201420226224 U
(43) Date of publication of application: 14.01.2015
(73) Proprietor: Taizhou Dajiang Industry Co., Ltd., Taizhou, Zhejiang (CN)
(72) Inventor: Yang, Mingjun, Taizhou (CN); Zou, Chengwei, Taizhou (CN)
(74) Representative: Sun, Yiming

(56) References cited:
- EP-A1- 1 043 080
- EP-A1- 1 704 923
- WO-A2-2007/109729
- US-A1- 2008 315 581
- US-A1- 2009 145 503
- US-B2- 6 976 640

## Description

### Technical Field

The present invention relates to the technical field of tools, particularly an air-power tool gun with quick-changing structure.

### Background Art

Air-power tool gun can be used in many engineering or processing occasions, and different applications need different gun-nozzles. It is common that air-power tool gun is matched with multiple gun-nozzles. It is premium for air-power tool gun to replace its working-head quickly, conveniently and firmly. Further more, this kind of replacing structure cannot be complicated, and complicated structure means high cost and hard to maintain.

US patent No. US6,663,023B1 disclosed a quick-changing structure of gun-nozzle, and it can achieve to replace the gun-nozzle quickly, however, its structure is complicated, and it has too many parts, not only high processing cost, but also easy to be broken; it can not be operated by one hand, not conveniently enough; it can not be used for tire-pressure gun.

The quick-changing structure of gun-nozzle disclosed by US patent No. US4, 919, 334 is a technical resolution of combing multiple plastic thread bushings. The technical resolution can prevent rotation between gun-nozzle and gun-body, but the way of combing thread is inconvenient for operate, and functional part can not be replaced by one hand; further more, the plastic thread can not be use reliably.

US patent No. US6, 976, 640, though it is convenient for replacing, it still needs two-handeded operation, can not be replaced by one hand; furthermore, the gun-nozzle can not be positioned on the direction of rotation, and it can not be used in the occasion with air pressure.

### Summary of the Invention

The present invention provides an air-power tool gun with quick-changing structure, and the technical problem resolved by the present invention is: the changeable connector of air-power tool gun is not convenient to be replaced and its structure is complicated. In order to resolve the above-mentioned problem, the technical resolution of the present invention is an air-power tool gun with quick-changing structure according to the claims.

The advantages and beneficial effects of the present invention are as follows: the present invention provides an air-power tool gun with quick-changing structure, wherein it is convenient and quick for changing the gun-nozzle connector, and it can be operated by one hand, and it can prevent rotation between the gun-nozzle and gun-body, and it is applicable for the occasion with air-pressure; meanwhile, the structure is simple, and the manufacturing cost is low.

### Description of the Drawings

In order to explain the technical solutions of the embodiments of the present invention or the existing technique more clearly, the drawings used in the description of the embodiments or the existing technique are explained briefly as follows. Obviously, the drawings in the description are only some embodiments of the present invention, for the ordinary skilled persons in the art, other drawings can be obtained according to these drawings on the premise of without inventive labor.
Fig. 1 is the schematic diagram of disassembled structure of example 1 of the present invention;
Fig. 2 is the longitudinal plane sectional diagram of the front part of the gun-body of the example 1 of the present invention;
Fig. 3 is the schematic diagram of A-A section of Fig. 2;
Fig. 4 is the schematic diagram of disassembled structure of the quick-changing structure of example 1 of the present invention;
Fig. 5 is the schematic diagram of the structure of the quick-changing structure button of example 1 of the present invention;
Fig. 6 is the schematic diagram of the structure of the rotation-positioning connecting piece of the quick-changing structure of example 1 of the present invention;
Fig. 7 is the schematic diagram of the structure of the positioning locking stand of the example 1 of the present invention;
Fig. 8 is the schematic diagram of the upward view of the structure of the positioning locking stand of the example 1 of the present invention;
Fig. 9 is the schematic diagram of the whole structure of the example 2 of the present invention;
Fig. 10 is the schematic diagram of the fastening state of the changeable gun-nozzle connector of the example 2 of the present invention;
Fig. 11 is the schematic diagram of the releasing state of the changeable gun-nozzle connector of the example 2 of the present invention;
Fig. 12 is the disassembled diagram of the connecting components of the example 2 of the present invention;
Fig. 13 is the schematic diagram of the original state of the example 2 of the present invention;
Fig. 14 is the schematic diagram of the state of the push rod being pushed forward of the example 2 of the present invention;
Fig. 15 is the schematic diagram of the state of the lower end of the position-limiting piece separated from the first groove when the push rod being pushed forward of the example 2 of the present invention;
   Wherein: 1. gun-body 11. front part of the gun-body 2. gun-nozzle connector connecting structure 21. the second groove 3. guiding groove 4. operation button 41. rib I 42. teeth I 5. position-limiting piece 51. embossment of the position-limiting piece 52. arc-shaped bottom margin of the position-limiting piece 53. the second spring 54. position-limiting piece stand 6. changeable gun-nozzle connector 61. convex shoulder 62. the first groove 7. sealing ring
   8. covering loop for the sealing ring 9. rotation positioning connecting piece
   91. convex plate structure 92. rib II 93. teeth III 10. positioning locking stand 101. fixing hole for changeable gun-nozzle connector 102. locking stand body 103. locking stand neck 104. rib III 105. groove 106. locking groove of the rib III 107. installing groove for the position-limiting piece
   108. installing hole for the operation button 109. slope of the rib III
   12. the third spring 13. push rod 131. slope of the push rod 132. the first spring

### Embodiments

The detailed embodiments of the present invention will be further described combing with the drawings and examples. The following examples are only used to explain the technical solution of the present invention more clearly, not used to limit the protective range of the present invention.

### Example 1

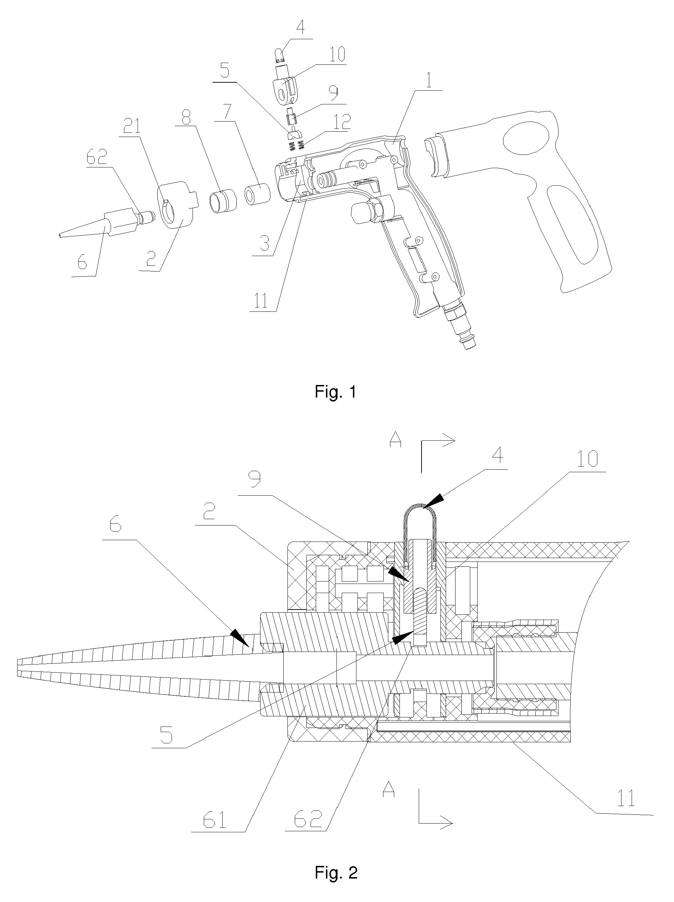

As shown in Fig.1, the present is an air-power tool gun with quick-changing structure, includes gun-body 1 suitable for air-flow passing and changeable gun-nozzle connector 6, and the gun-body 1 has device for controlling the air-flow and air-guiding pipeline inside, and the front part of the gun-body is set with gun-nozzle connector connecting structure 2 for gun-nozzle connector to insert, and the center of the changeable gun-nozzle connector 6 has the pipe connected with the said air-guiding pipeline, and the gun-body also is set with quick-changing structure, and the quick-changing structure includes the first groove 61 set on the changeable gun-nozzle connector 6, a guiding groove 3 vertical to the said air-guiding pipeline, a transmission structure and position-limiting piece 5.

The above-mentioned transmission structure includes operation button 4, rotation positioning connecting piece 9, positioning locking stand 10 and the third spring 12 set between the said position-limiting piece 5 and the positing locking stand.

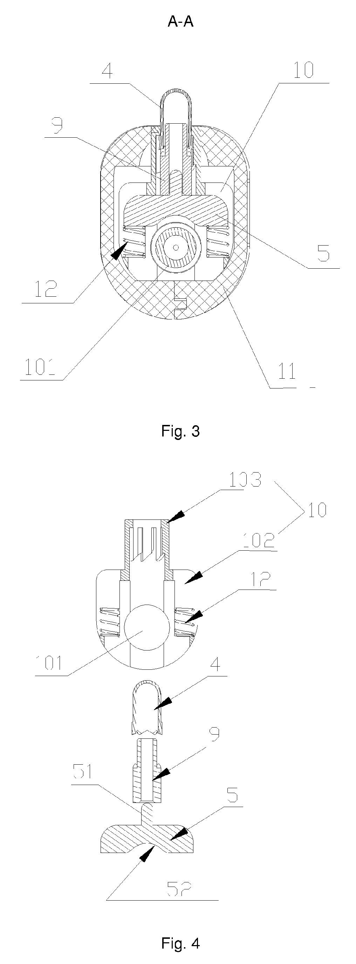

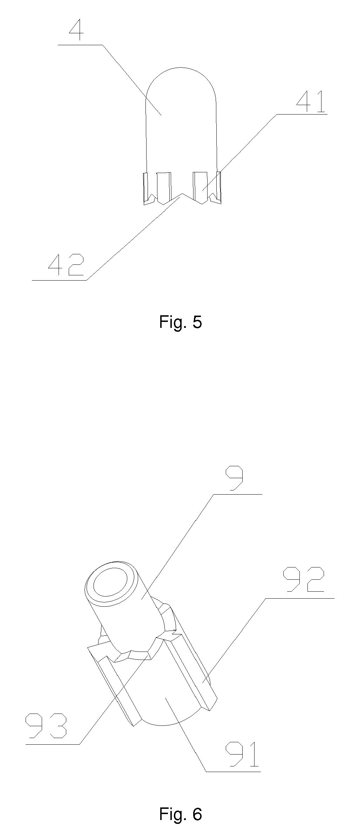

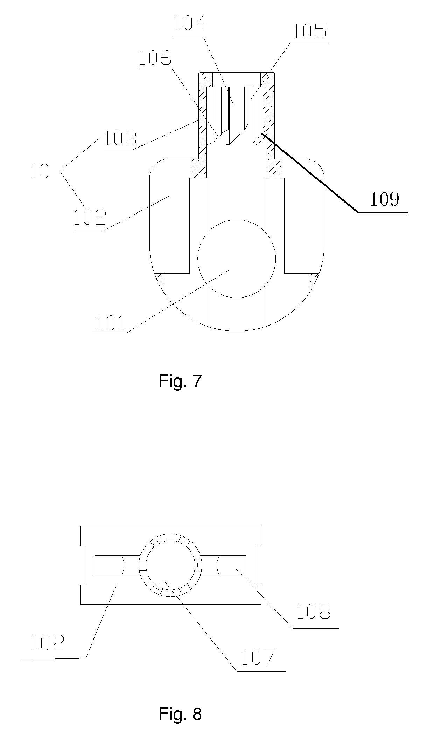

As shown in Fig.2-8, the upper end of the position-limiting piece 5 is an embossment 51, and the middle of the lower margin of the position-limiting piece is arc-shaped 52 corresponding to the first groove of the changeable gun-nozzle connector.

The said positioning locking stand 10 is hollow, includes locking stand body 102 and locking stand neck 103, and the locking stand body 102 is set with fixed hole 101 for changeable gun-nozzle connector, and the inner wall of the locking stand neck 103 is set with the positioning structure evenly, and the positioning structure includes the ribs III 104 extruded from inner wall and the groove 105 between the adjacent ribes III 104, and the end of the rib III 104 is set with locking groove 106 and slope 109; the bottom of the positioning locking stand 10 is set with installing groove 107 for the position-limiting piece and installing hole 108 for operation button.

The said operation button 4 is set with holes, and the lower part of its outer wall is set with rib I 41 corresponding to the groove 105 of the inner wall of the locking stand neck, and the bottom line of the operation button is also set with angular teeth I 42;

The rotation positioning connecting piece 9 is set with hole, and the outer wall of the lower part of the rotation positioning connecting piece 9 is set with a convex plate structure 91, and the outer wall of convex plate structure 91 is set with ribs II 92 evenly, and the said ribs II 92 also can match with groove 105 of the inner wall of the locking stand neck, and the upper margin of the convex plate structure 91 of the rotation positioning connecting piece is set with angular teeth II 93.

When the quick-changing structure is installed, the upper part of the rotation positioning connecting piece 9 can be slideably covering connection into the hole of the operation button 4, and then the above-mentioned structure is put into the inside of the positioning locking stand 10 through the fixing hole 107 for operation button of the bottom of the positioning locking stand 10, and the operation button 4 is passed through the positioning locking stand neck 103, and the rib I 41 of the operation button and the rib II 92 of the rotation positioning connecting piece 9 are both inserted into the groove 105 of the inner wall of the positioning locking stand neck 103 when installed. And then, the position-limiting piece 5 is put into the positioning locking stand 10 through the installing groove107 for the position-limiting piece of the bottom of the positioning locking stand 10, and the embossment 51 of the position-limiting piece can be in covering connection inside the hole of the rotation positioning connecting piece 9 slideably; and then the two springs are installed separately between the two ends of the bottom of the position-limiting piece 5 and the inside bottom of the positioning locking stand 10, and finally, the said positioning locking stand 10 is set inside the guiding groove 3.

The changeable gun-nozzle connector is passed through the fixing hole 101 for the changeable gun-nozzle connector, and the arc-shaped middle part 52 of the lower margin of the position-limiting piece 5 can be in locking connection with the first groove 62 of the changeable gun-nozzle connector 6, and the changeable gun-nozzle connector 6 is set with convex shoulder 61, and the gun-nozzle connector connecting structure 2 is set with the second groove 21 matched with the convex shoulder 61 to prevent the rotation between the changeable gun-nozzle connector 6 and gun-body 1.

The front part 11 of the said gun-body is set with sealing ring 7, and the outer of the sealing ring 7 is covered with the covering loop 8 for the sealing ring, and the covering loop 8 for the sealing ring is connected firmly with the gun-nozzle connecting structure 2.

When the installation of the changeable gun-nozzle connector is finished, the operation button 4 is pushed down, and the teeth II 92 of the rotation positioning connecting piece 9 are stuck on the locking groove 106 on the end of the rib III 104 on the inner wall of the positioning locking stand neck 103, and the two end of the lower end the position-limiting piece 5 pushes the third spring 12 downward tightly, and the arc-shaped bottom margin of the position-limiting piece 52 is stuck tightly inside the first groove 62 of the changeable gun-nozzle connector 6.

When the changeable gun-nozzle is needed to be changed, the operation button is pushed down, and the rib I 41 of the operation button 4 slides downward along the groove 105 of the inner wall of the locking stand neck 103, so as to push the teeth II 93 of the rotation positioning connecting piece 9 out from locking groove 106 on the end of the rib III 104 of the inner wall of the positioning locking stand neck 103, and make the teeth I 42 of the bottom line of the operation button 4 and the teeth II 93 of the rotation positioning connecting piece 9 interlock together.

The changeable gun-nozzle connector is inserted into the gun-nozzle connecting structure 2 and passed through the fixing hole 101 for the changeable gun-nozzle connector of the positioning locking stand 10, and then the operation button 4 is pushed down, the teeth I 42 of the operation button 4 is interlocked with the teeth II 93 of the rotation positioning connecting piece 9, and the rib I 41 and the rib II 92 both slide downward in the groove 105 and push the position-limiting piece to slide downward. When the rib II 92 of the rotation positioning connecting piece slides out from the groove 105 completely, and under the interaction of the slope of the teeth II 93 and the locking groove 106 of the rib III 104 of the teeth II 93, the rotation positioning connecting piece 9 rotates and slides into the locking groove 106 of the rib III 104, and the teeth II 93 of the rotation positioning connecting piece 9 is locked downward tightly by the groove 105, thus the position-limiting piece 5 is locked downward tightly to the first groove 62 of the changeable gun-nozzle connector 6, finishing the installation of the new changeable gun-nozzle connector.

### Example 2

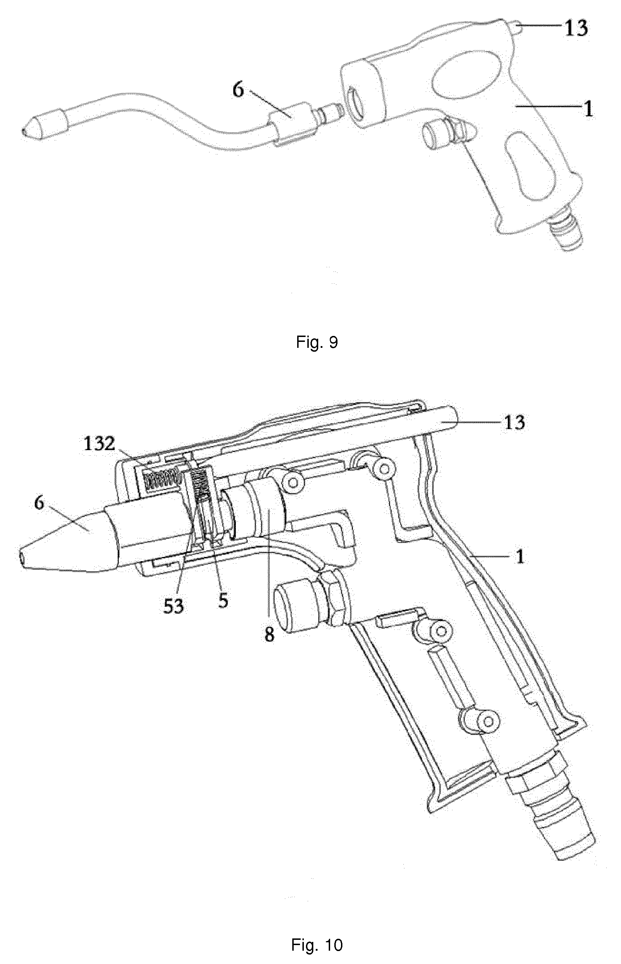

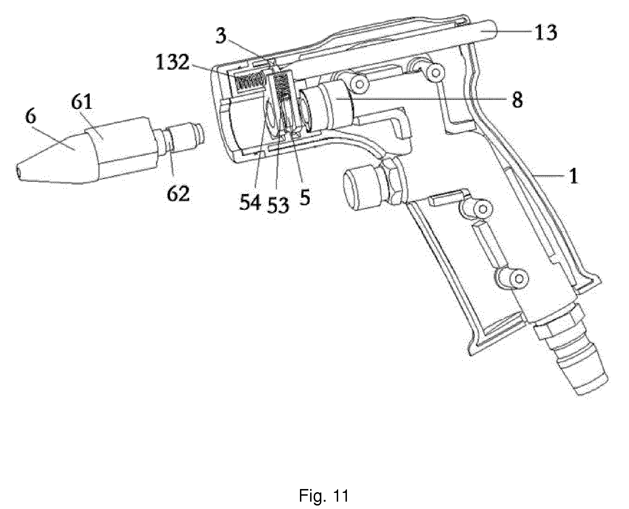

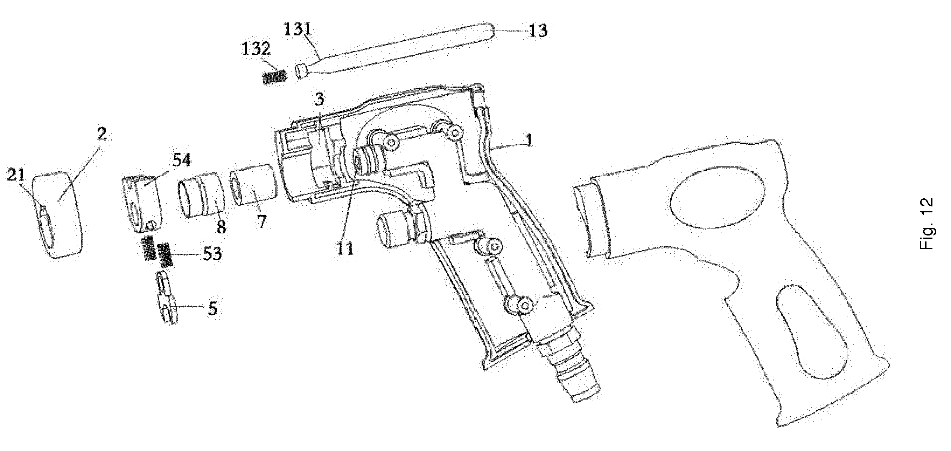

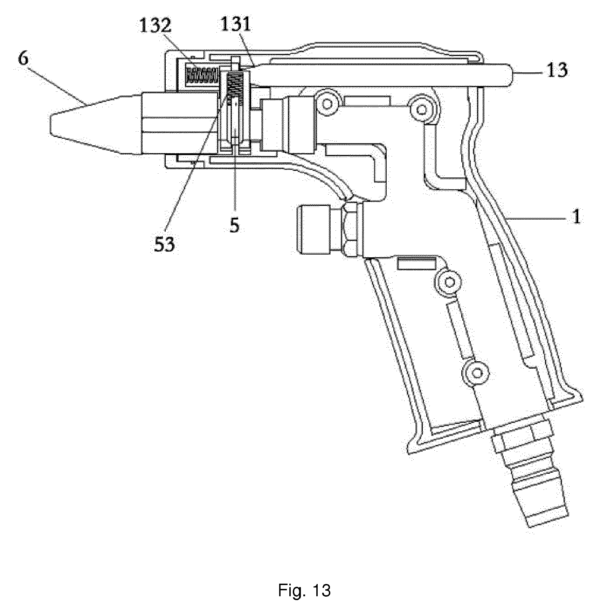

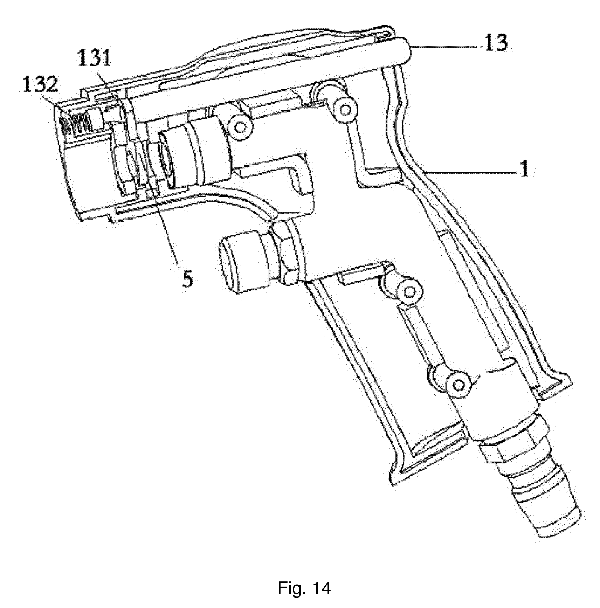

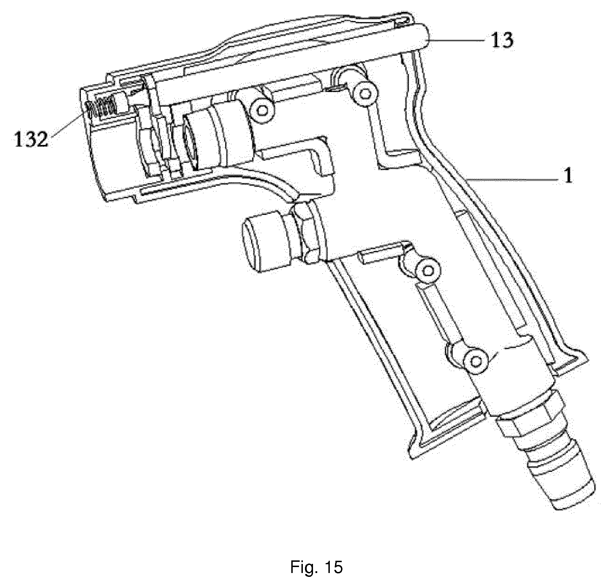

The present invention also has other embodiments, as shown in Fig.9 to Fig.15, includes gun-body 1 suitable for air-flow passing, and the gun-body 1 has device for controlling the air-flow and air-guiding pipeline, and the front part 11 of the gun-body is set with gun-nozzle connector connecting structure 2 for gun-nozzle connector 6 to insert, and the front end of the air-guiding pipeline is equipped with quick-changing structure, and the said quick-changing structure is set within the gun-body 1, and the said quick-changing structure includes a guiding groove 3 vertical to the said air-guiding pipeline, a push rod 13 paralleling to the said air-guiding pipeline, and the said push rod 13 is set with slope 131 on the part corresponding to the guiding groove 3; the rear part of the push rod 13 passes through the rear end of the gun-body as the handed operation handle; the first spring 132 is set between the push rod 13 and the gun-body 1, and the first spring 132 pushes the push rod 13 backward thus to make the push rod 13 relocation; a position-limiting piece 5 which can be set in the said guiding groove 3 slideably, and the upper part of the position-limiting 5 can hang on the slope 131 of the said push rod 13 slideably; the second spring 53 is set between the position-limiting piece 5 and the gun-body 1, and the second spring 53 pushes the position-limiting piece downward, and make the lower margin of the position-limiting piece 5 enter into the first groove 62 of the changeable gun-nozzle connector; a changeable gun-nozzle connector 6, therein its center has the pipeline connected with the said air-guiding pipeline, and its upper part has the first groove 62 for the position-limiting piece 5 to insert, so as to combine with the gun-body 1.

The part with the slope 131 of the said push rod 13 is cone; the said changeable gun-nozzle connector 6 is set with convex shoulder 61, and the said gun-nozzle connecting structure 2 of the gun-body is set with the second groove 21 matching with the said convex shoulder 61 so as to prevent the rotation between the changeable gun-nozzle connector 6 and the gun-body; and the front part 11 of the gun-body is set with sealing ring 7, and the sealing ring is covered with covering loop 8 for sealing ring, and the covering loop 8 for sealing ring is in sealed connection with the gun-nozzle connecting structure 2; and the position-limiting piece 5 is set on a position-limiting stand 54.

When the changeable gun-nozzle connector is needed to be changed, the push rod 13 is pushed forward from the position of the handle, and the position-limiting piece 5 slides along the slope 131 of the push rod 13, and the position-limiting piece 5 is lifted upward, and the lower margin of the position-limiting piece is detached from the first groove 62 of the changeable gun-nozzle connector 6, and at this time, the changeable gun-nozzle connector can be taken down from the gun-body 1. The assembling of the changeable gun-nozzle connector is much simpler, and the changeable gun-nozzle connector 6 is pushed into the gun-nozzle connecting structure 2 of the gun-body 1, and when the first groove 62 of the changeable gun-nozzle connector is aimed at the position-limiting piece 5, the position-limiting piece 5 inserts into the first groove 62 under the pushing of the second spring 53, thus make the changeable gun-nozzle connector 6 connect with the gun-body 1.

Meanwhile ,the convex shoulder 61 of the gun-nozzle connector 6 must be aimed to the second groove 21 of the gun-nozzle connector connecting structure 2 of the gun-body 1, and thus can make the gun-nozzle connector 6 enter into the gun-nozzle connector connecting structure 2. Therefore, the changeable gun-nozzle connector 6 cannot happen relative rotation with the gun-body 1.

The above-mentioned is only the preferable embodiments of the present invention, not to limit the present invention, and any changes, substitutions and improvements etc., within the spirit and principle of the present invention, should be included in the protective range of the present invention.

## Claims

1. An air-power tool gun with quick-changing structure, including:
a gun-body (1) suitable for air-flow passing and
a changeable gun-nozzle connector (6),
wherein the gun-body (1) has a device for controlling the air-flow and an air-guiding pipeline inside, and the gun-body is set with a gun-nozzle connector connecting structure (2), and the center of the changeable gun-nozzle connector (6) has a pipe connected with the air-guiding pipeline,
wherein the gun-body (1) is also set with a quick-changing structure, and the changeable gun-nozzle connector (6) is connected detachably with the gun-body by the quick-changing structure,
**characterized in that** the changeable gun-nozzle connector (6) is set with a convex shoulder (61), and the gun-nozzle connecting structure (2) is set with a second groove (21) corresponding to the convex shoulder (61), so as to prevent rotation between the changeable gun-nozzle connector and the gun-body,
and **in that,**
said quick-changing structure includes: a guide groove (3), a position-limiting piece (5) installed slideably in said guide groove, a position-limiting piece connecting structure (62) set on said changeable gun-nozzle connector (6), a transmission structure; said transmission structure being set with a position-limiting piece moving structure (4, 9), and one end of said position-limiting piece (5) being connected slideably with said position-limiting piece moving structure (4,9), and the other end of said position-limiting piece being in locking connection with the position-limiting piece connecting structure (62) of said changeable gun-nozzle connector (6), wherein when said transmission structure moves, it drives the position-limiting piece (5) to move with it, so as to separate from the locking connection with the position-limiting piece connecting structure (62) set on said changeable gun-nozzle connector (6).

2. The air-power tool gun with quick-changing structure of the claim 1, **characterized in that**: wherein the position-limiting piece connecting structure set on the said changeable gun-nozzle connector is a first groove (62) set on the changeable gun-nozzle connector (6); the said transmission structure includes a push rod and a first spring set between the said push rod and the gun-body; the said push rod is paralleled with the said air-guiding pipeline, and the said first spring pushes the push rod backwardly so as to make the push rod reset; the rear of the push rod passes through the back end of the gun-body, as the hand-operated handle; the said position-limiting piece moving structure is the slope set on the part of the said push rod corresponding to the guiding groove; between the said position-limiting piece and the gun-body is set with the second spring, and the said upper part of the said position-limiting piece hangs on the slope of the said push rod slideably, and the lower margin of the said position-limiting piece is in locking connection with the first groove of the said changeable gun-nozzle connector (6).

3. The air-power tool gun with quick-changing structure of the claim 2, **characterized in that**: wherein the part of the said push rod corresponding to the slope set on the guiding groove is cone.

4. The air-power tool gun with quick-changing structure of the claim 2, **characterized in that**: wherein the said position-limiting piece (5) is set on a position-limiting piece stand.

5. The air-power tool gun with quick-changing structure of the claim 1, **characterized in that**:
wherein the position-limiting piece connecting structure set on the said changeable gun-nozzle connector (6) is the first groove (62) set on the changeable gun-nozzle connector (6); and the transmission structure further comprises an operation button (4), a rotation-positioning connecting piece (9) being part of the position limiting piece moving structure, a positioning locking stand (10) and a third spring (12) set between the said position-limiting piece and the positioning locking stand; the said position-limiting moving structure including the operation button and the rotation-positioning connecting piece, and the said operation button and rotation-positioning connecting piece are both set with holes, and the outer wall of lower part of the said rotation-positioning connecting piece is set with a convex plate structure, and the said upper part of the said rotation-positioning connecting piece can be in covering connected inside the holes of the said operation button slideably;
wherein the upper end of the said position-limiting piece is an embossment, and the embossment can be in covering connected inside the holes of the rotation-positioning connecting piece slideably; the said positioning locking stand is set with fixing holes for changeable gun-nozzle connector, and the said changeable gun-nozzle connector passed through the holes, and the said positioning locking stand is hollow structure, and the operation button, rotation-positioning connecting piece and the position-limiting piece are installed inside the positioning locking stand;
wherein the upper end of the said operation button passes out from the inside of the positioning locking stand, and two ends of the lower margin of the said position-limiting piece are flexibly contacted with the bottom inside the said positioning locking stand through the said third spring, and the middle part of the lower margin of the said position-limiting piece is in locking connection with the first groove of the changeable gun-nozzle connector, and the said positioning locking stand is set inside the guiding groove; the said gun-body (1) is set with hole for operation button (4), and the upper end of the said operation button passes out from gun-body through the hole.

6. The air-power tool gun with quick-changing structure of the claim 5, **characterized in that**: wherein the said positioning locking stand includes locking stand body and locking stand neck, and the inner wall of the said locking stand neck is set with the positioning structure evenly, and the said positioning structure includes the ribs III extruded from inner wall and the groove between the adjacent ribs III, and the end of the said rib III is set with locking groove and slope; the lower part of the outer wall of the operation button is set with the ribs I (41) corresponding to the groove on the inner wall of the locking stand neck, and the bottom margin of the said operation button is also set with angular teeth I (42); the outer wall of the convex plate structure of the said rotation-positioning connecting piece is set with ribs II (92) well-distributed, and the said ribs II can also match with the groove on the inner wall of the locking stand neck, and the upper margin of the convex plate structure of the said rotation-positioning connecting piece is set with angular teeth II (93).

7. The air-power tool gun with quick-changing structure of the claim 6, **characterized in that**: wherein the bottom of the said positioning locking stand is set installing groove for the position-limiting piece and installing hole for the operation button (4).

8. The air-power tool gun with quick-changing structure of the claim 7, **characterized in that**: wherein the middle of the bottom margin of the said position-limiting piece is arc-shaped corresponding to the first groove of the changeable gun-nozzle connector (6).

9. The air-power tool gun with quick-changing structure of any one of claims 1 to 8, **characterized in that**: wherein the front part of the said gun-body (1) is set with sealing ring, and the outside of the said sealing ring is covered with covering loop for sealing ring, and the said covering loop for sealing ring is connected firmly with the said gun-nozzle connector connecting structure.

## Patentansprüche

1. Luftbetriebene Werkzeugpistole mit Schnellwechsel-Struktur, umfassend: einen Pistolenkörper (1), der für die Durchleitung eines Luftstroms geeignet ist, und ein austauschbares Pistolen-Düsen-Verbindungsstück (6),
wobei der Pistolenkörper (1) ein Vorrichtung zur Regelung des Luftstroms und eine Luftführungs-Pipeline im Inneren aufweist, und der Pistolenkörper eine Verbindungsstruktur für Pistolen-Düsen-Verbindungsstück (2) aufweist, und die Mitte des austauschbaren Pistolen-Düsen-Verbindungsstücks (6) eine Leitung aufweist, welche mit der Luftführungs-Pipeline verbunden ist,
wobei der Pistolenkörper (1) ebenfalls eine Schnellwechsel-Struktur aufweist, und das austauschbare Pistolen-Düsen-Verbindungsstück (6) mit dem Pistolenkörper durch die Schnellwechsel-Struktur lösbar verbunden ist,
**dadurch gekennzeichnet, dass** das austauschbare Pistolen-Düsen-Verbindungsstück (6) eine konvexe Schulter (61) aufweist und die Pistolendüse Verbindungsstruktur (2) eine zweite Nut (21) aufweist, welche mit der konvexen Schulter (61) übereinstimmt, um die Rotation zwischen dem austauschbaren Pistolen-Düsen-Verbindungsstück und dem Pistolenkörper zu unterbinden,
**und dadurch, dass**
die Schnellwechsel-Struktur Folgendes umfasst: eine Führungsnut (3), ein positionsbegrenzendes Teil (5), das in der Führungsnut gleitend installiert ist, eine Verbindungsstruktur für positionsbegrenzendes Teil (62), welche an dem austauschbaren Pistolen-Düsen-Verbindungsstück (6) angeordnet ist, eine Übertragungsstruktur; wobei die Übertragungsstruktur eine Bewegungsstruktur für positionsbegrenzendes Teil (4, 9), und ein Ende des positionsbegrenzenden Teils (5) mit der Bewegungsstruktur für positionsbegrenzendes Teil (4, 9) gleitend verbunden ist, und das andere Ende des positionsbegrenzenden Teils in Sperrverbindung mit der Verbindungsstruktur für positionsbegrenzendes Teil (62) des austauschbaren Pistolen-Düsen-Verbindungsstücks (6) ist, wobei wenn sich die Übertragungsstruktur bewegt, sie das positionsbegrenzende Teil (5) mit zur Bewegung antreibt, um sich von der Sperrverbindung mit der Verbindungsstruktur für positionsbegrenzendes Teil (62), die am austauschbaren Pistolen-Düsen-Verbindungsstück (6) angeordnet ist, zu trennen.

2. Luftbetriebene Werkzeugpistole mit Schnellwechsel-Struktur nach Anspruch 1, wobei die Verbindungsstruktur für positionsbegrenzendes Teil, die auf der austauschbaren Pistolen-Düsen-Verbindungsstück angeordnet ist, eine erste Nut (62) ist, die am austauschbaren Pistolen-Düsen-Verbindungsstück (6) angeordnet ist; die Übertragungsstruktur eine Schubstange und eine erste Feder umfasst, die zwischen der Schubstange und dem Pistolenkörper angeordnet ist; die Schubstange mit der Luftführungs-Pipeline parallel ist, und die erste Feder die Schubstange rückwärts schiebt, um die Schubstange in die Grundstellung zu fahren; der Hinterteil der Schubstange durch das rückseitige Ende des Pistolenkörpers als Hand betriebener Tragegriff tritt; die Bewegungsstruktur für positionsbegrenzendes Teil das Gefälle ist, das am Teil der Schubstange, der mit der Führungsnut übereinstimmt, angeordnet ist; zwischen dem positionsbegrenzenden Teil und dem Pistolenkörper die zweite Feder angeordnet ist, und der obere Teil des positionsbegrenzenden Teils hängt gleitend am Gefälle der Schubstange, und der untere Rand des positionsbegrenzenden Teils in Sperrverbindung mit der ersten Nut des austauschbaren Pistolen-Düsen-Verbindungsstücks (6) ist.

3. Luftbetriebene Werkzeugpistole mit Schnellwechsel-Struktur nach Anspruch 2, wobei der Teil der Schubstange, der mit dem Gefälle übereinstimmt, der an der Führungsnut angeordnet ist, konisch ist.

4. Luftbetriebene Werkzeugpistole mit Schnellwechsel-Struktur nach Anspruch 2, wobei das positionsbegrenzende Teil (5) auf einem Ständer für positionsbegrenzendes Teil angeordnet ist.

5. Luftbetriebene Werkzeugpistole mit Schnellwechsel-Struktur nach Anspruch 1,
wobei die Verbindungsstruktur für positionsbegrenzendes Teil, die am austauschbaren Pistolen-Düsen-Verbindungsstück (6) angeordnet ist, die erste Nut (62) ist, welche am austauschbaren Pistolen-Düsen-Verbindungsstück (6) angeordnet ist; und die Übertragungsstruktur ferner einen Bedienungsknopf (4) umfasst, wobei ein rotationspositionierendes Verbindungsstück (9) Teil der Bewegungsstruktur ist, ein Ständer zur Positionsverriegelung (10) und eine dritte Feder (12), welche zwischen dem positionsbegrenzenden Teil und dem Ständer zur Positionsverriegelung angeordnet ist; wobei die positionsbegrenzende Bewegungsstruktur den Bedienungsknopf und das rotationspositionierende Verbindungsstück umfasst, und sowohl der Bedienungsknopf als auch das rotationspositionierende Verbindungsstück Löcher aufweist, und die Außenwand des unteren Teils des rotationspositionierenden Verbindungsstücks eine konvexe Plattenstruktur aufweist, und der obere Teil des rotationspositionierenden Verbindungsstücks in der Abdeckung innerhalb der Löcher des Bedienungsknopfes gleitend verbunden sein kann;
wobei das obere Ende des positionsbegrenzenden Teils eine Ausprägung ist, und die Ausprägung in der Abdeckung innerhalb der Löcher des Bedienungsknopfes gleitend verbunden sein kann; der Ständer zur Positionsverriegelung Befestigungslöcher für das austauschbare Pistolen-Düsen-Verbindungsstück aufweist, und das austauschbare Pistolen-Düsen-Verbindungsstück durch die Löcher tritt, und der Ständer zur Positionsverriegelung eine hohle Struktur ist, und der Bedienungsknopf, das rotationspositionierende Verbindungsstück und das positionsbegrenzende Teil innerhalb des Ständers zur Positionsverriegelung installiert sind;
wobei das obere Ende des Bedienungsknopfes aus dem Inneren des Ständers zur Positionsverriegelung austritt, und zwei Enden des unteren Rands des positionsbegrenzenden Teils flexibel in Kontakt mit dem Boden innerhalb des Ständers zur Positionsverriegelung durch die dritte Feder sind, und die Mitte des unteren Rands des positionsbegrenzenden Teils in Sperrverbindung mit der ersten Nut des austauschbaren Pistolen-Düsen-Verbindungsstücks ist, und der Ständer zur Positionsverriegelung innerhalb der Führungsnut angeordnet ist; der Pistolenkörper (1) ein Loch für den Bedienungsknopf (4) aufweist, und das obere Ende des Bedienungsknopfes aus dem Pistolenkörper durch das Loch hindurch tritt.

6. Luftbetriebene Werkzeugpistole mit Schnellwechsel-Struktur nach Anspruch 5, wobei der Ständer zur Positionsverriegelung Verriegelungsständerkörper und Verriegelungsständerhals umfasst, und die Innenwand des Verriegelungsständerhalses mit der Positionierungsstruktur eben ist, und die Positionierungsstruktur die Rippen III umfasst, die aus der Innenwand und der Nut zwischen den benachbarten Rippen III extrudiert ist, und das Ende der Rippe III eine Sperrnut und ein Gefälle aufweist; der untere Teil der Außenwand des Bedienungsknopfes die Rippen I (41) aufweist, welche mit der Nut an der Innenwand des Verriegelungsständerhals übereinstimmt, und der untere Rand des Bedienungsknopfes auch winkelige Zähne I (42) aufweist; die Außenwand der konvexen Plattenstruktur des rotationspositionierenden Verbindungsstücks gut verteilte Rippen II (92) aufweist, und die Rippen II auch mit der Nut an der Innenwand des Verriegelungsständerhalses übereinstimmen, und der obere Rand der konvexen Plattenstruktur des rotationspositionierenden Verbindungsstücks winkelige Zähne II (93) aufweist.

7. Luftbetriebene Werkzeugpistole mit Schnellwechsel-Struktur nach Anspruch 6, wobei der Boden des Ständers zur Positionsverriegelung eine Installationsnut für das positionsbegrenzende Teil und ein Installationsloch für den Bedienungsknopf (4) aufweist.

8. Luftbetriebene Werkzeugpistole mit Schnellwechsel-Struktur nach Anspruch 7, wobei die Mitte des unteren Rands des positionsbegrenzenden Teils bogenförmig ist und mit der ersten Nut des austauschbaren Pistolen-Düsen-Verbindungsstücks (6) übereinstimmt.

9. Luftbetriebene Werkzeugpistole mit Schnellwechsel-Struktur nach einem der Ansprüche 1 bis 8, wobei der vordere Teil des Pistolenkörpers (1) einen Dichtungsring aufweist, und die Außenseite des Dichtungsrings mit einer Abdeckungsschlaufe für Dichtungsring abgedeckt ist, und die Abdeckungsschlaufe für Dichtungsring fest mit der Verbindungsstruktur für Pistolen-Düsen-Verbindungsstück verbunden ist.

## Revendications

1. Pistolet à air avec structure de remplacement rapide, comprenant : un corps de pistolet (1) approprié pour le passage d'un courant d'air et un connecteur pistolet-buse échangeable (6),
dans lequel le corps de pistolet (1) comporte un dispositif de régulation du courant d'air et un pipeline de conduite d'air à l'intérieur, et le corps de pistolet comporte une structure de raccordement de connecteur pistolet-buse échangeable (2), et le centre du connecteur pistolet-buse échangeable (6) comporte une conduite reliée au pipeline de conduite d'air,
dans lequel le corps de pistolet (1) est également posé avec une structure de remplacement rapide, et le connecteur pistolet-buse échangeable (6) est relié de manière amovible au corps de pistolet par la structure de remplacement rapide,
**caractérisé en ce que** le connecteur pistolet-buse échangeable (6) comporte une épaule convexe (61) et la structure de raccordement de buse de pistolet (2) comporte une deuxième rainure (21) correspondant à l'épaule convexe (61) de manière à empêcher la rotation entre le connecteur pistolet-buse échangeable et le corps de pistolet,
**et en ce que**
ladite structure de remplacement rapide comprend : une rainure de guidage (3), une pièce de limitation de position (5) installée de manière coulissante dans ladite rainure de guidage, une structure de raccordement de pièce de limitation de position (62) posée sur ledit connecteur pistolet-buse échangeable (6), une structure de transmission ; ladite structure de transmission étant posée avec une structure de déplacement de pièce de limitation de position (4, 9), et une extrémité de ladite pièce de limitation de position (5) étant reliée de manière coulissante à ladite structure de déplacement de pièce de limitation de position (4, 9), et l'autre extrémité de ladite pièce de limitation de position étant en connexion bloquante avec la structure de raccordement de pièce de limitation de position (62) dudit connecteur pistolet-buse échangeable (6), dans lequel, lorsque ladite structure de transmission se déplace, elle entraîne la pièce de limitation de position (5) à se déplace avec elle de manière à se séparer de la connexion bloquante avec la structure de raccordement de pièce de limitation de position (62) posée sur ledit connecteur pistolet-buse échangeable (6).

2. Pistolet à air avec structure de remplacement rapide selon la revendication 1, **caractérisé en ce que** : la structure de raccordement de pièce de limitation de position posée sur ledit connecteur pistolet-buse échangeable est une première rainure (62) posée sur le connecteur pistolet-buse échangeable (6) ; ladite structure de transmission comprend une tige de poussée et un premier ressort posé entre ladite tige de poussée et le corps de pistolet ; ladite tige de poussée est parallèle audit pipeline de conduite d'air, et ledit premier ressort pousse la tige de poussée vers l'arrière de manière à ce que la tige de poussée rendre à sa position initiale ; l'arrière de la tige de poussée passe à travers le bout arrière du corps de pistolet, comme poignée de transport à main ; ladite structure de déplacement de pièce de limitation de position est la déclivité posée sur la pièce de ladite tige de poussée correspondant à la rainure de guidage ; entre ladite pièce de limitation de position et le corps de pistolet comporte le deuxième ressort, et ladite partie supérieure de ladite pièce de limitation de position est suspendue de manière coulissante sur la déclivité de ladite tige de poussée, et le bord inférieur de ladite pièce de limitation de position est en connexion bloquante avec la première rainure dudit connecteur pistolet-buse échangeable (6).

3. Pistolet à air avec structure de remplacement rapide selon la revendication 2, dans lequel la partie de ladite tige de poussée correspondant à la déclivité posée sur la rainure de guidage est conique.

4. Pistolet à air avec structure de remplacement rapide selon la revendication 2, dans lequel ladite pièce de limitation de position (5) est posée sur un support de pièce de limitation de position.

5. Pistolet à air avec structure de remplacement rapide selon la revendication 1,
dans lequel la structure de raccordement de pièce de limitation de position posée sur ledit connecteur pistolet-buse échangeable (6) est la première rainure (62) posée sur le connecteur pistolet-buse échangeable (6) ; et la structure de transmission comprend en outre un bouton de commande (4), une pièce de raccordement à positionnement en rotation pièce (9) faisant partie de la structure de déplacement de pièce de limitation de position, un support de positionnement encliquetable (10) et un troisième ressort (12) posé entre ladite pièce de limitation de position et le support de positionnement encliquetable ; ladite structure de déplacement de pièce de limitation de position comprenant le bouton de commande et la pièce de raccordement à positionnement en rotation, et ledit bouton de commande et ladite pièce de raccordement à positionnement en rotation pièce comportent tous les deux posés des trous, et la paroi extérieure de la partie inférieure de ladite pièce de raccordement à positionnement en rotation pièce comporte une structure de plaque convexe, et ladite partie supérieure de ladite pièce de raccordement à positionnement en rotation peut être reliée dans le couvercle à l'intérieur des trous dudit bouton de commande de manière coulissante ;
dans lequel l'extrémité supérieure de ladite pièce de limitation de position est une bosse, et la bosse peut être reliée dans le couvercle à l'intérieur des trous de la pièce de raccordement à positionnement en rotation pièce de manière coulissante ; ledit support de positionnement encliquetable comporte des trous de fixation pour le connecteur pistolet-buse échangeable, et ledit connecteur pistolet-buse échangeable traverse les trous, et ledit support de positionnement encliquetable est une structure creuse, et le bouton de commande, la pièce de raccordement à positionnement en rotation et la pièce de limitation de position sont installés à l'intérieur du support de positionnement encliquetable ;
dans lequel l'extrémité supérieure dudit bouton de commande sort de l'intérieur du support de positionnement encliquetable, et deux extrémité du bord inférieur de ladite pièce de limitation de position sont en contact flexible avec le fond à l'intérieur dudit support de positionnement encliquetable à travers ledit troisième ressort, et la partie centrale du bord inférieur de ladite pièce de limitation de position est en connexion bloquante avec la première rainure du connecteur pistolet-buse échangeable, et ledit support de positionnement encliquetable est posé à l'intérieur de la rainure de guidage ; ledit corps de pistolet (1) comporte un trou pour le bouton de commande (4), et l'extrémité supérieure dudit bouton de commande sort du corps de pistolet à travers le trou.

6. Pistolet à air avec structure de remplacement rapide selon la revendication 5, dans lequel ledit support de positionnement encliquetable comprend le corps de support encliquetable et le col de support encliquetable, et la paroi intérieure dudit col de support encliquetable est au même niveau que la structure de positionnement, et ladite structure de positionnement comprend les nervures III extrudées de la paroi intérieure et la rainure entre les nervures adjacentes III, et l'extrémité de ladite nervure III comporte une rainure encliquetable et une déclivité ; la partie inférieure de la paroi extérieure du bouton de commande comporte les nervures I (41) correspondant à la rainure sur la paroi intérieure du col de support encliquetable, et le bord inférieur dudit bouton de commande comporte également des dents angulaires I (42) ; la paroi extérieure de la structure de plaque convexe de ladite pièce de raccordement à positionnement en rotation comporte des nervures II (92) bien distribuées, et lesdites nervures II peuvent également concorder avec la rainure sur la paroi intérieure du col de support encliquetable, et le bord supérieur de la structure de plaque convexe de ladite pièce de raccordement à positionnement en rotation pièce comporte des dents angulaires II (93).

7. Pistolet à air avec structure de remplacement rapide selon la revendication 6, dans lequel le fond dudit support de positionnement encliquetable comporte une rainure d'installation pour la pièce de limitation de position et un trou d'installation pour le bouton de commande (4).

8. Pistolet à air avec structure de remplacement rapide selon la revendication 7, dans lequel le centre du bord inférieur de ladite pièce de limitation de position est arqué et correspond à la première rainure du connecteur pistolet-buse échangeable (6).

9. Pistolet à air avec structure de remplacement rapide selon l'une quelconque des revendications 1 à 8, dans lequel la partie avant dudit corps de pistolet (1) comporte une bague d'étanchéité, et la face extérieure de ladite bague d'étanchéité est recouverte par une boucle de recouvrement pour bague d'étanchéité, et ladite boucle de recouvrement pour bague d'étanchéité est reliée de manière fixe à ladite structure de raccordement de connecteur pistolet-buse échangeable.
